# DEMANDE DE BREVET EUROPEEN

(11) **EP 1 270 322 A1**
(43) Date de publication de la demande: **02.01.2003**
(21) Numéro de dépôt: 02291513.6
(22) Date de dépôt: 17.06.2002
(51) Int. Cl.: B60Q 1/068, B60Q 1/076

(54) **Dispositif d'éclairage à orientation variable**

(30) Priorité: 29.06.2001 FR 0108904
(71) Demandeur: VALEO VISION, 93012 Bobigny Cédex (FR)
(72) Inventeur: Ravier, Jean Paul, 93012 Bobigny Cédex (FR)

(57) **Abrégé**

La présente invention concerne un dispositif d'éclairage, comportant un système optique capable de générer un faisceau lumineux et constitué d'une source lumineuse et d'un réflecteur (10), le système optique étant monté sur un châssis (14) par l'intermédiaire d'un point fixe comportant une articulation à rotule (18, 20).

Selon la présente invention, le système optique est maintenu sur le châssis (14, 114) par une deuxième liaison élastique (24, 32) et par une troisième liaison (36) susceptible d'être mise en mouvement par un actionneur (38).

## Description

La présente invention concerne les dispositifs d'éclairage à orientation variable, pouvant par exemple équiper les véhicules automobiles.

Lorsque l'on désire orienter un dispositif d'éclairage selon plusieurs directions non coplanaires, par exemple en site et en azimut, il est possible de monter le système d'éclairage de manière à ce qu'il soit mobile en rotation autour de deux axes orthogonaux, et d'utiliser deux actionneurs pour mettre en mouvement le système d'éclairage autour de chacun de ces deux axes, de manière à pouvoir diriger le faisceau lumineux engendré par le dispositif d'éclairage dans toutes les directions, aussi bien horizontalement que verticalement et qu'obliquement.

Il existe cependant des cas où on souhaite qu'un faisceau lumineux soit animé de mouvements dans deux directions, et seulement dans ces deux directions. Autrement dit, on souhaite que le faisceau lumineux émis par le dispositif d'éclairage puisse être déplacé selon deux lignes, par exemple l'une de ces lignes étant horizontale et l'autre verticale, toute autre direction du faisceau lumineux n'étant pas désirée.

Il est alors connu de monter le dispositif d'éclairage sur un cadre de façon à ce qu'il soit mobile autour d'un axe sous l'effet d'un actionneur, puis de rendre le cadre mobile autour d'un deuxième axe, par exemple perpendiculaire au premier, sous l'effet d'un deuxième actionneur. Une autre solution connue consiste à affecter un dispositif d'éclairage, mobile autour d'un axe unique, à chaque direction dans laquelle on désire un faisceau d'éclairage mobile. Il est donc nécessaire d'avoir autant de dispositifs d'éclairage que de directions d'éclairement. Ces solutions s'avèrent coûteuses par la multiplication des projecteurs et/ou des actionneurs qui en découle, et proposent des systèmes encombrants, complexes et peu fiables.

La présente invention se place dans ce contexte et elle a pour but de proposer un dispositif d'éclairage à orientation variable selon deux axes, n'utilisant qu'un seul actionneur pour mettre en mouvement le dispositif d'éclairage selon ces deux axes, les mouvements ainsi réalisés ayant la précision voulue, le dispositif de mise en mouvement étant de fonctionnement fiable, facile à assembler, peu encombrant et peu coûteux.

La présente invention a donc pour objet un dispositif d'éclairage, comportant un système optique capable de générer un faisceau lumineux et constitué d'une source lumineuse et d'un réflecteur, le système optique étant monté sur un châssis par l'intermédiaire d'un point fixe comportant une articulation à rotule.

Selon la présente invention, le système optique est maintenu sur le châssis par une deuxième liaison élastique et par une troisième liaison susceptible d'être mise en mouvement par un actionneur, de préférence un unique actionneur.

Selon d'autres caractéristiques avantageuses et non limitatives de l'invention :
- le système optique comporte de plus un bras susceptible de venir en butée sur le châssis sous l'effet de l'actionneur ;
- le châssis comporte un logement pour recevoir le bras du système optique, le logement autorisant des mouvements de rotation du bras sur lui-même ;
- le châssis comporte au moins une aile pour guider le bras du système optique vers le logement ;
- la deuxième liaison élastique comporte un moyen élastique sollicitant vers l'arrière une tige solidaire du système optique ;
- la tige solidaire du système optique constitue avec le point fixe comportant une articulation à rotule un premier axe de rotation pour le système optique.

Selon un premier mode de réalisation :
- la tige est solidaire du système optique par l'intermédiaire d'une liaison à rotule ;
- la tige solidaire du système optique comporte une première butée sollicitée vers l'arrière par le moyen élastique ;
- la tige solidaire du système optique comporte une deuxième butée limitant la course de la tige vers l'arrière ;
- la troisième liaison comporte une tige montée rotulante sur le système optique et susceptible d'être mise en mouvement de translation par l'actionneur maintenu sur le châssis.

Selon un deuxième mode de réalisation :
- la tige solidaire du système optique est susceptible de coulisser dans une ouverture oblongue du châssis ;
- la tige solidaire du système optique est sollicitée vers l'arrière de l'ouverture oblongue par un moyen élastique ;
- la tige solidaire du système optique est solidaire d'un pignon ou d'un secteur denté susceptible d'être mis en mouvement de rotation ;
- le pignon ou le secteur denté est susceptible d'être mis en mouvement de rotation par une crémaillère mise en mouvement par un actionneur linéaire.
- le pignon ou le secteur denté est susceptible d'être mis en mouvement de rotation par un deuxième pignon solidaire de l'arbre de sortie d'un actionneur rotatif ;
- le secteur denté comporte une partie circulaire et une partie rectiligne ;
- l'arbre de sortie de l'actionneur rotatif est reçu à rotation dans un alésage du châssis.

Dans ces deux modes de réalisation, le châssis est orientable en site et en azimut. L'invention a également pour objet le dispositif décrit précédemment, où le système optique comprend un unique réflecteur et, de préférence, une unique source lumineuse. Avantageusement, le système optique remplit au moins trois fonctions, notamment une fonction aide au virage, une fonction anti-brouillard et une fonction route.

D'autres buts, caractéristiques et avantages de la présente invention ressortiront clairement de la description qui va maintenant être faite d'un exemple de réalisation donné à titre non limitatif en référence aux dessins annexés sur lesquels :
- La Figure 1 représente une vue schématique en perspective d'un dispositif d'éclairage à orientation variable selon la présente invention, dans une première position ;
- La Figure 2 représente le dispositif d'éclairage de la Figure 1 dans une deuxième position,
- La Figure 3 représente une vue partielle en perspective d'une variante de réalisation du dispositif d'éclairage de la Figure 1 ;
- La Figure 4 représente une vue schématique en perspective d'un deuxième mode de réalisation de l'invention ;
- La Figure 5 représente une vue en coupe selon la ligne V-V de la Figure 4, et
- La Figure 6 est une vue analogue à celle de la Figure 5 d'une variante du deuxième mode de réalisation.

Sur les différentes Figures, les éléments identiques ou jouant le même rôle sont affectés des mêmes signes de référence, éventuellement augmentés de 100.

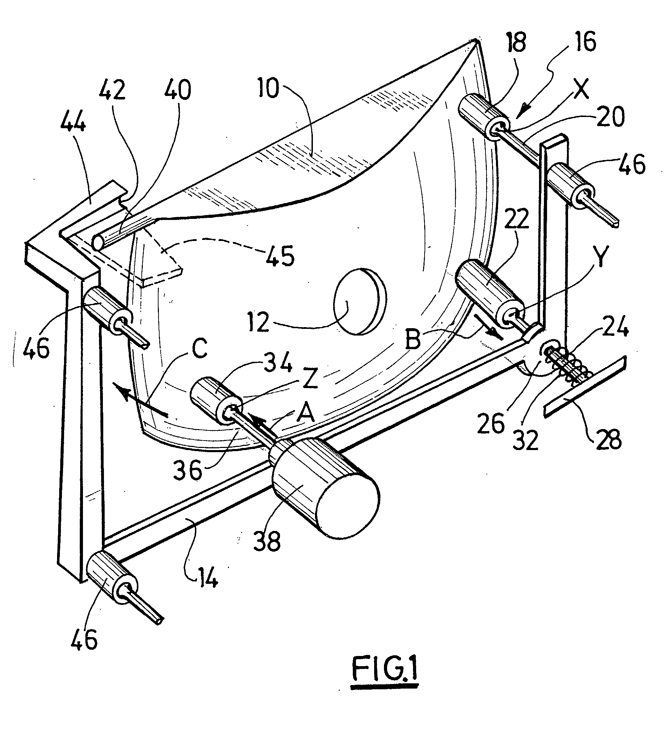

On a représenté sur la Figure 1 une vue schématique en perspective de l'arrière d'un dispositif d'éclairage à orientation variable réalisé selon la présente invention.

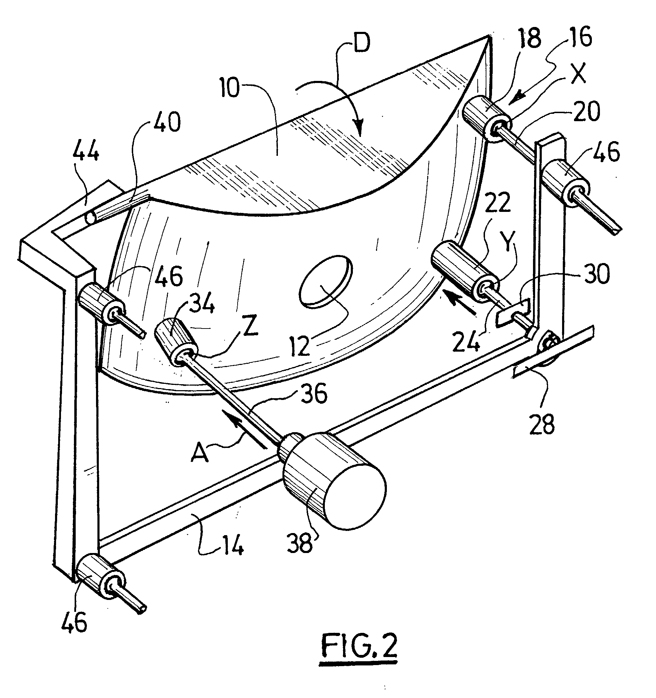

Par convention, dans la présente description, on appelle " avant " la direction dans laquelle le faisceau lumineux est émis, et "arrière" la direction opposée. On voit ainsi sur les Figures 1 et 2 la face non réfléchissante d'un réflecteur 10, dans lequel un trou de lampe 12 a été prévu pour l'introduction et le maintien en place d'une source lumineuse (non représentée). De manière classique, les rayons lumineux émis par la source lumineuse sont réfléchis par la face réfléchissante du réflecteur 10 pour former un faisceau lumineux. Selon la géométrie du réflecteur 10, et éventuellement des aménagements optiques prévus sur une glace de fermeture (non représentée) du dispositif d'éclairage, le faisceau lumineux aura une répartition spatiale et une photométrie prédéterminées.

Le réflecteur 10 est maintenu en position par trois points non alignés. Selon la présente invention, le réflecteur 10 est monté sur un châssis 14 par l'intermédiaire d'un point fixe 16 du type articulation à rotule. Une telle articulation à rotule peut comporter par exemple un canon 18, solidaire du réflecteur 10, retenant prisonnière une rotule X formée à l'extrémité d'une tige 20, solidaire du châssis 14. Bien entendu, la tige 20 pourrait être solidaire du réflecteur 10 et le canon 18 solidaire du châssis 14

Le réflecteur 10 est formé avec un deuxième canon 22, retenant prisonnière une rotule Y formée à l'extrémité d'une tige 24 susceptible de coulisser dans une ouverture 26 du châssis 14. De manière plus précise, la tige 24 est formée avec deux butées 28 et 30 (Figure 2) limitant la course de la tige 24 par rapport au châssis 14. Un ressort 32 est intercalé entre le châssis 14 et la butée arrière 28, de manière à solliciter cette butée, et donc la tige 24, vers l'arrière. Le canon 22 et la tige 24 constituent ainsi une liaison élastique du réflecteur 10 sur le châssis 14.

Le réflecteur 10 est formé avec un troisième canon 34, retenant prisonnière une rotule Z formée à l'extrémité d'une tige 36 susceptible d'être mise en mouvement par un actionneur linéaire 38 fixé au châssis 14.

Enfin, le réflecteur 10 est formé avec un bras 40 destiné à coopérer avec un logement 42 prévu dans une partie 44 du châssis 14. De préférence, le bras 40 est cylindrique, et le logement 42 présente un fond concave semi-cylindrique de rayon de courbure sensiblement égal au rayon du bras 40.

A la lecture de ce qui précède, on aura compris comment l'invention peut être mise en oeuvre. Dans une première position de l'actionneur 38, représentée sur la Figure 1, la tige 36 occupe une position arrière extrême. Dans cette position, le bras 40 est à distance du logement 42, et la tige 24 occupe également sa position arrière de repos, sous l'action du ressort 32, la butée 30 de la tige 24 étant en contact avec le châssis 14. Le réflecteur projette alors, lorsque la source lumineuse est allumée, un faisceau lumineux dans une première direction.

Lorsque l'actionneur 38 est commandé, il met en mouvement la tige 36 vers l'avant, dans le sens de la flèche A. Dans ce mouvement, la tige 36 entraîne par l'intermédiaire de sa rotule d'extrémité Z le canon 34 vers l'avant. La tige 24 étant toujours sollicitée en butée vers l'arrière dans le sens de la flèche B par le ressort 32, le réflecteur 10 effectue alors un mouvement de rotation autour d'un premier axe passant par le centre des rotules X et Y, dans le sens de la flèche C sur la Figure 1. Dans ce mouvement, le faisceau lumineux émis par le réflecteur 10 se déplace le long d'une première ligne perpendiculaire au premier axe X - Y, par exemple une ligne horizontale de gauche à droite.

Ce mouvement de rotation du réflecteur 10 se poursuit jusqu'à ce que le bras 40 vienne en butée au fond du logement 42. Avantageusement, on pourra prévoir que le châssis 14 soit formé avec deux ailes parallèles 45, une seule ayant été représentée en pointillés sur la Figure 1 pour la clarté du dessin, de manière à guider le bras 40 dans son mouvement vers le logement 42. Les deux ailes 45 pourront être réunies vers l'arrière pour empêcher le bras 40 de sortie de l'espace qu'elles définissent entre elles sous l'effet des vibrations auxquelles le véhicule automobile est soumis lors de son utilisation.

Le réflecteur 10 se trouve alors dans une position intermédiaire. Si la tige 36 poursuit son mouvement vers l'avant, elle provoque alors la mise en mouvement de la tige 24, qui se déplace alors à son tour vers l'avant en comprimant le ressort 32. Le réflecteur 10 effectue alors un mouvement de rotation autour d'un deuxième axe passant par le centre de la rotule X et par l'axe du bras 40 coïncidant avec l'axe du logement 42, dans le sens de la flèche D sur la Figure 2.

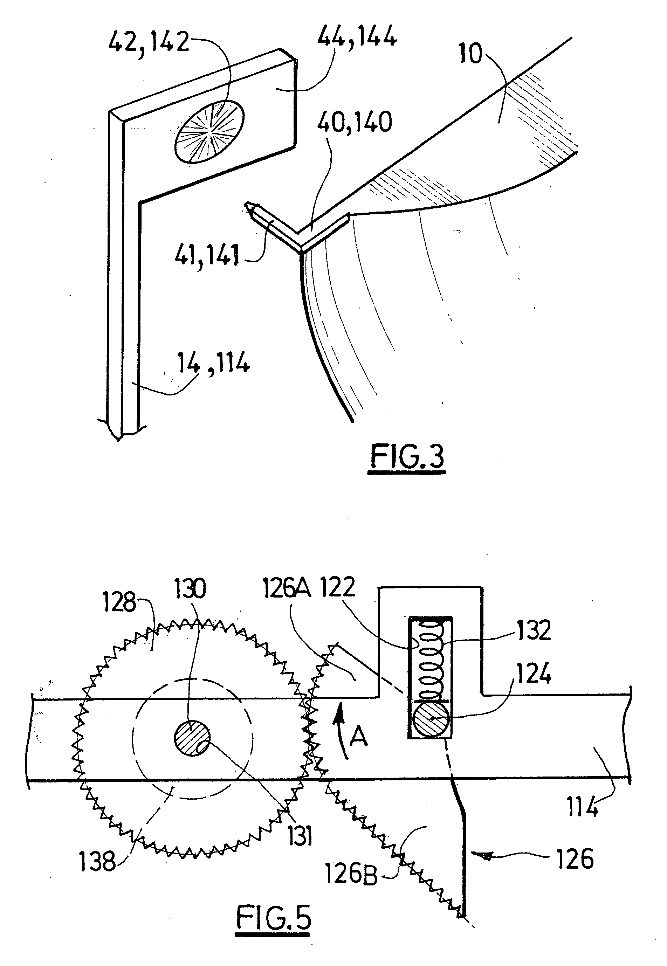

Avantageusement, l'axe du logement semi-cylindrique 42, formé dans la partie 44 du châssis 14, sera orienté de manière à passer par le centre de la rotule X, formée à l'extrémité de la tige 20 solidaire du châssis 14. En variante, on pourra prévoir, comme on l'a représenté sur la Figure 3, que le bras 40 soit formé avec une saillie 41 dont l'extrémité pointue sera reçue dans un logement 42 conique. Le réflecteur 10 effectuera alors un mouvement de rotation autour d'un deuxième axe passant par le centre de la rotule X et par le sommet du logement conique 42.

Dans ce mouvement, le faisceau lumineux émis par le réflecteur 10 se déplace le long d'une deuxième ligne perpendiculaire au deuxième axe X - 42, par exemple une ligne verticale ascendante. Ce mouvement peut se poursuivre jusqu'à ce que la butée 28 de la tige 24 vienne en contact avec le châssis 14, ou sur une butée formée sur lui et prévue à cet effet. Le réflecteur 10 se trouve alors dans une deuxième position avant extrême.

Lorsque l'actionneur 38 est commandé pour que la tige 36 revienne en arrière, la tige 36 ramène alors le canon 34 vers l'arrière, tandis que le ressort 32 sollicite la tige 24 également vers l'arrière, et donc le canon 22. Le réflecteur 10 effectue donc un mouvement de rotation autour de l'axe X- 42, dans le sens contraire à celui de la flèche D sur la Figure 2.

Dans ce mouvement, le faisceau lumineux émis par le réflecteur 10 se déplace le long de la deuxième ligne perpendiculaire au deuxième axe X - 42, par exemple une ligne verticale descendante. Ce mouvement se poursuit jusqu'à ce que la butée 30 de la tige 24 vienne en contact avec le châssis 14, ou sur une butée formée sur lui et prévue à cet effet. Le réflecteur 10 se retrouve alors dans la position intermédiaire.

Si la tige 36 poursuit son mouvement vers l'arrière, elle provoque alors la séparation entre le bras 40 ou la saillie 41 et le logement 42. Le réflecteur 10 effectue alors un mouvement de rotation autour du premier axe passant par le centre des rotules X et Y dans le sens contraire à celui de la flèche C sur la Figure 1. Dans ce mouvement, le faisceau lumineux émis par le réflecteur 10 se déplace le long de la première ligne perpendiculaire au premier axe X - Y, par exemple une ligne horizontale de droite à gauche, jusqu'à ce qu'il retrouve la première position extrême représentée sur la Figure 1.

On a donc bien réalisé selon la présente invention un dispositif d'éclairage à orientation variable selon deux axes, qui n'utilise qu'un seul actionneur pour mettre en mouvement le dispositif d'éclairage selon ces deux axes. Les mouvements du faisceau lumineux ainsi réalisés peuvent avoir toute amplitude prédéterminée, selon la première ligne en disposant le troisième canon 34 plus ou moins loin de l'axe X - Y, et/ou selon la deuxième ligne en disposant le troisième canon 34 plus ou moins loin de l'axe X- 42.

On pourra également prévoir de mettre en mouvement la tige 36 par un actionneur autre que linéaire, par exemple un moteur pas à pas, dont l'arbre de sortie rotatif sera muni d'un pignon engrenant avec une crémaillère formée sur la tige 36, ou encore un moteur dont l'arbre de sortie sera conformé en vis sans fin, coopérant avec un écrou solidaire de la tige 36.

On pourra ainsi commander les mouvements du réflecteur 10 pour orienter le faisceau lumineux dans différentes directions. On pourra par exemple prévoir que la position intermédiaire soit la position de repos de l'actionneur 38, et donc du réflecteur 10, et que dans cette position le faisceau émis soit un faisceau antibrouillard. Si, à partir de la position intermédiaire, la tige 36 est commandée vers l'avant, le faisceau lumineux est relevé, et peut venir compléter le faisceau d'un projecteur de route. Inversement, si, à partir de la position intermédiaire, la tige 36 est commandée vers l'arrière, le faisceau lumineux est orienté latéralement, vers la gauche dans l'exemple des Figures 1 et 2, et peut venir éclairer des zones en dehors de l'axe longitudinal du véhicule, par exemple des zones situées à l'intérieur d'un virage que le véhicule est sur le point d'aborder.

Selon un autre exemple d'application, on pourra prévoir que la deuxième position, dans laquelle la tige 36 est dans sa position extrême avant, soit la position de repos de l'actionneur 38 et que dans cette position, le faisceau lumineux émis soit un faisceau de route, et que la première position, dans laquelle la tige 36 est dans sa position extrême arrière, soit une position destinée à éclairer des zones situées à l'intérieur d'un virage que le véhicule est sur le point d'aborder.

On pourra également prévoir que le châssis 14 soit lui-même orientable, en site et en azimut, par exemple par l'intermédiaire de canons 46, de manière à régler l'orientation du réflecteur 10 à l'aide d'actionneurs électriques ou manuels (non représentés) et rendre le faisceau lumineux conforme aux réglementations, par exemple dans la position intermédiaire si celle-ci est la position de repos et que le faisceau émis est un faisceau antibrouillard, ou dans la position extrême avant si celle-ci correspond à un faisceau de route.

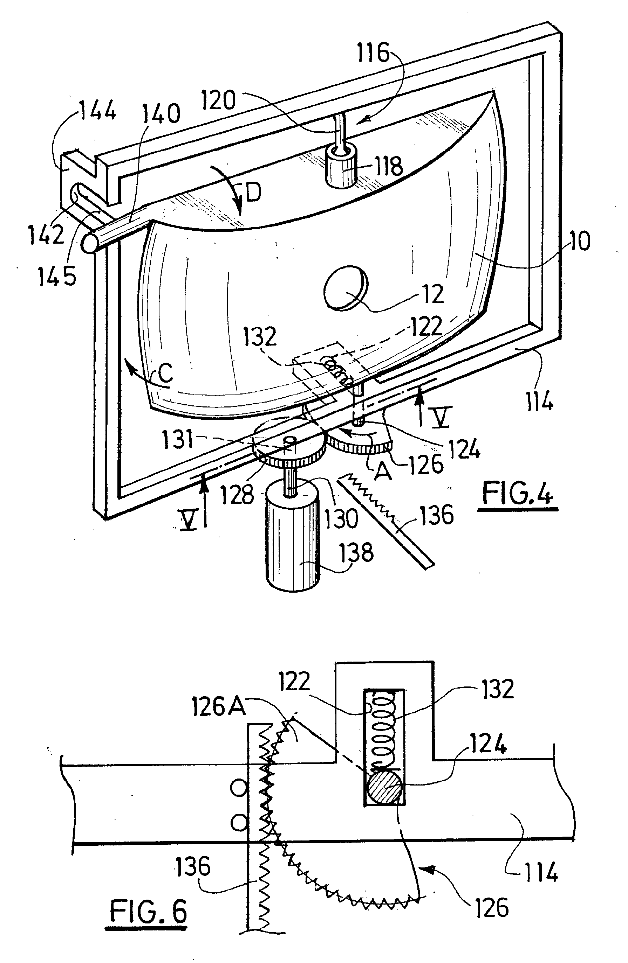

On a représenté sur la Figure 4 un deuxième mode de réalisation de la présente invention. Selon ce mode de réalisation, le réflecteur 10 est monté sur un châssis 114 par l'intermédiaire d'un point fixe 116 du type articulation à rotule. Une telle articulation à rotule peut comporter par exemple un canon 118, solidaire du réflecteur 10, retenant prisonnière une rotule X' formée à l'extrémité d'une tige 120, solidaire du châssis 14. Bien entendu, la tige 120 pourrait être solidaire du réflecteur 10 et le canon 118 solidaire du châssis 114.

Le réflecteur 10 est solidaire d'un arbre 124, traversant une cavité oblongue 122 formée dans le châssis 114 et solidaire d'un secteur denté 126. Le secteur denté 126 comporte une partie 126A circulaire, et une partie 126B rectiligne (Figure 5). L'arbre 124 et le canon 118 sont alignés, comme on l'a représenté sur la Figure 4, de telle sorte que la ligne les joignant forme un axe sensiblement perpendiculaire à l'axe optique du réflecteur 10 et passant par cet axe optique. Le secteur denté 126 engrène avec un pignon 128, susceptible d'être mis en mouvement de rotation par un actionneur rotatif 138.

En variante, comme on l'a représenté sur la Figure 6, le secteur denté 126 engrène avec une crémaillère 136, susceptible d'être mise en mouvement de translation par un actionneur linéaire (non représenté). Selon cette variante, le secteur denté 126 est circulaire.

Le pignon 128 ou l'actionneur 138 ont un axe de rotation fixe par rapport au châssis 114. Pour ce faire, on peut prévoir que l'axe 130 les reliant soit reçu à rotation dans un alésage 131 du châssis. En variante, la crémaillère 136 est susceptible d'être animée d'un mouvement de translation selon une direction fixe par rapport au châssis 114. On pourra alors prévoir que le côté de la crémaillère 136 opposé à celui qui engrène avec le secteur denté 126 soit en appui sur une ou plusieurs butées 135 solidaires du châssis 114, comme on l'a représenté sur la Figure 6.

Comme on le voit mieux sur la Figure 5, l'arbre 124 solidaire du réflecteur 10 est reçu dans la cavité oblongue 122 du châssis en étant susceptible de coulisser dans cette cavité. L'arbre 124 est soumis à l'action d'un ressort de compression 132, sollicitant l'arbre 124 vers l'arrière, et autorisant les mouvements de rotation de l'arbre 124 sur lui-même.

Enfin, comme dans le mode de réalisation précédent, le réflecteur 10 est formé avec un bras 140 destiné à coopérer avec un logement 142 prévu dans une partie 144 du châssis 114. De préférence, le bras 140 est cylindrique, et le logement 142 présente un fond concave semi-cylindrique de rayon de courbure sensiblement égal au rayon du bras 140.

Dans une première position de l'actionneur 38, représentée sur les Figures 4 et 5, le secteur denté 126, solidaire du réflecteur 10 occupe une position angulaire extrême, dans laquelle le bras 140 est à distance du logement 142, et l'arbre 124 occupe également sa position arrière de repos dans la cavité 122, sous l'action du ressort 132. Le réflecteur projette alors, lorsque la source lumineuse est allumée, un faisceau lumineux dans une première direction.

Lorsque l'actionneur 138 est commandé, il met en rotation le pignon 128 et le pignon 126, ce dernier tournant dans le sens de la flèche A sur les Figures 4 et 5. Dans ce mouvement, l'arbre 124, solidaire du pignon 126 et du réflecteur 10, entraîne ce dernier dans un mouvement de rotation autour d'un premier axe passant par le centre de la rotule X' et le fond de la cavité 122, dans le sens de la flèche C sur la Figure 4. Dans ce mouvement, le faisceau lumineux émis par le réflecteur 10 se déplace le long d'une première ligne perpendiculaire à ce premier axe, par exemple une ligne horizontale de gauche à droite.

Ce mouvement de rotation du réflecteur 10 se poursuit jusqu'à ce que le bras 140 vienne en butée au fond du logement 142. Selon ce mode de réalisation, il n'est pas nécessaire de prévoir des parties de guidage des mouvements du bras 140, puisque sa position est déterminée par les parois de la cavité 122, par le canon 118 et par la position angulaire du pignon 126.

Le réflecteur 10 se trouve alors dans une position intermédiaire. Si le pignon 126 est encore commandé en rotation dans le sens de la flèche A, il engrène alors avec la partie rectiligne 126B du secteur denté 126, et provoque alors la mise en mouvement de l'arbre 124, qui se déplace alors à son tour vers l'avant dans la cavité 122 en comprimant le ressort 132. Le réflecteur 10 effectue alors un mouvement de rotation autour d'un deuxième axe passant par le centre de la rotule X' et par l'axe du bras 140 coïncidant avec l'axe du logement 42, dans le sens de la flèche D sur la Figure 4.

Avantageusement, l'axe du logement semi-cylindrique 142, formé dans la partie 144 du châssis 114, sera orienté de manière à passer par le centre de la rotule X', formée à l'extrémité de la tige 120 solidaire du châssis 114. En variante, on pourra prévoir, comme dans le mode de réalisation précédent, que le bras 140 soit formé avec une saillie 141 dont l'extrémité pointue sera reçue dans un logement 142 conique. Le réflecteur 10 effectuera alors un mouvement de rotation autour d'un deuxième axe passant par le centre de la rotule X' et par le sommet du logement conique 142.

Dans ce mouvement, le faisceau lumineux émis par le réflecteur 10 se déplace le long d'une deuxième ligne perpendiculaire au deuxième axe X' - 142, par exemple une ligne verticale ascendante. Ce mouvement peut se poursuivre jusqu'à ce que l'arbre 124 arrive en butée dans le fond de la cavité 122, ou sur une butée (non représentée) formée dans celle-ci. Le réflecteur 10 se trouve alors dans une deuxième position avant extrême.

Lorsque le pignon 126 est commandé dans le sens contraire à celui de la flèche A, l'arbre 124 ramène alors le réflecteur 10 vers l'arrière par l'intermédiaire de la partie rectiligne 126B du secteur denté 126, le ressort 132 sollicitant l'arbre 124 vers l'arrière. Le réflecteur 10 effectue donc un mouvement de rotation autour de l'axe X' - 142, dans le sens contraire à celui de la flèche D sur la Figure 4.

Dans ce mouvement, le faisceau lumineux émis par le réflecteur 10 se déplace le long de la deuxième ligne perpendiculaire au deuxième axe X' - 142, par exemple une ligne verticale descendante. Ce mouvement se poursuit jusqu'à ce que l'arbre 124 revienne au fond arrière de la cavité 122. Le réflecteur 10 se retrouve alors dans la position intermédiaire.

Si le pignon 126 poursuit son mouvement de rotation dans le sens contraire à celui de la flèche A sur la Figure 4, il engrène alors avec la partie circulaire 126A du secteur denté 126, et provoque alors la séparation entre le bras 140 ou la saillie 141 et le logement 142. Le réflecteur 10 effectue alors un mouvement de rotation autour du premier axe dans le sens contraire à celui de la flèche C sur la Figure 4. Dans ce mouvement, le faisceau lumineux émis par le réflecteur 10 se déplace le long de la première ligne perpendiculaire au premier axe, par exemple une ligne horizontale de droite à gauche, jusqu'à ce qu'il retrouve la première position extrême représentée sur la Figure 4.

On a donc bien réalisé selon la présente invention un dispositif d'éclairage à orientation variable selon deux axes, qui n'utilise qu'un seul actionneur pour mettre en mouvement le dispositif d'éclairage selon ces deux axes. Les mouvements du faisceau lumineux ainsi réalisés peuvent avoir toute amplitude prédéterminée avec la précision voulue.

On pourra également prévoir que le châssis 114 soit lui-même orientable, en site et en azimut, de manière à régler l'orientation du réflecteur 10 à l'aide d'actionneurs électriques ou manuels et rendre le faisceau lumineux conforme aux réglementations, par exemple dans la position intermédiaire si celle-ci est la position de repos et que le faisceau émis est un faisceau antibrouillard, ou dans la position extrême avant si celle-ci correspond à un faisceau de route.

## Revendications

1. Dispositif d'éclairage, comportant un système optique capable de générer un faisceau lumineux et constitué d'une source lumineuse et d'un réflecteur (10), le système optique étant monté sur un châssis (14, 114) par l'intermédiaire d'un point fixe comportant une articulation à rotule (18, 20 ; 118, 120), **caractérisé en ce que** le système optique est maintenu sur le châssis (14, 114) par une deuxième liaison élastique (24, 32 ; 124, 132) et par une troisième liaison (36, 126) susceptible d'être mise en mouvement par un unique actionneur (38, 138, 136).

2. Dispositif selon la revendication 1, **caractérisé en ce que** le système optique comporte de plus un bras (40, 140) susceptible de venir en butée sur le châssis (14, 114) sous l'effet de l'actionneur (38, 138, 136).

3. Dispositif selon la revendication 2, **caractérisé en ce que** le châssis (14, 114) comporte un logement (42, 142) pour recevoir le bras (40, 140) du système optique, le logement (42, 142) autorisant des mouvements de rotation du bras (40, 140) sur lui-même.

4. Dispositif selon la revendication 3, **caractérisé en ce que** le châssis (14, 114) comporte au moins une aile (45, 145) pour guider le bras (40, 140) du système optique vers le logement (42, 142).

5. Dispositif selon l'une des revendications 1 à 4, **caractérisé en ce que** la deuxième liaison élastique (24, 32 ; 124, 132) comporte un moyen élastique (32, 132) sollicitant vers l'arrière une tige (24, 124) solidaire du système optique.

6. Dispositif selon la revendication 5, **caractérisé en ce que** la tige (24, 124) solidaire du système optique constitue avec le point fixe comportant une articulation à rotule (18, 20 ; 118, 120) un premier axe de rotation pour le système optique.

7. Dispositif selon la revendication 6, **caractérisé en ce que** la tige (24) est solidaire du système optique par l'intermédiaire d'une liaison à rotule (Y, 22, 24).

8. Dispositif selon la revendication 7, **caractérisé en ce que** la tige (24) solidaire du système optique comporte une première butée (28) sollicitée vers l'arrière par le moyen élastique (32).

9. Dispositif selon la revendication 8, **caractérisé en ce que** la tige (24) solidaire du système optique comporte une deuxième butée (30) limitant la course de la tige (24) vers l'arrière.

10. Dispositif selon la revendication 1, **caractérisé en ce que** la troisième liaison comporte une tige (36) montée rotulante sur le système optique et susceptible d'être mise en mouvement de translation par l'actionneur (38) maintenu sur le châssis (14).

11. Dispositif selon la revendication 6, **caractérisé en ce que** la tige (124) solidaire du système optique est susceptible de coulisser dans une ouverture oblongue (122) du châssis(114).

12. Dispositif selon la revendication 11, **caractérisé en ce que** la tige (124) solidaire du système optique est sollicitée vers l'arrière de l'ouverture oblongue (122) par un moyen élastique (132).

13. Dispositif selon la revendication 11, **caractérisé en ce que** la tige (124) solidaire du système optique est solidaire d'un pignon ou d'un secteur denté (126) susceptible d'être mis au moins en mouvement de rotation.

14. Dispositif selon la revendication 13, **caractérisé en ce que** le pignon ou le secteur denté (126) est susceptible d'être mis en mouvement de rotation par une crémaillère (136) mise en mouvement par un actionneur linéaire.

15. Dispositif selon la revendication 13, **caractérisé en ce que** le pignon ou le secteur denté (126) est susceptible d'être mis en mouvement de rotation par un deuxième pignon (128) solidaire de l'arbre de sortie (130) d'un actionneur rotatif (138).

16. Dispositif selon la revendication 15, **caractérisé en ce que** le secteur denté (126) comporte une partie circulaire (126A) et une partie rectiligne (126B).

17. Dispositif selon la revendication 15, **caractérisé en ce que** l'arbre de sortie (130) de l'actionneur rotatif (138) est reçu à rotation dans un alésage (131) du châssis (114).

18. Dispositif selon l'une quelconque des revendications précédentes, **caractérisé en ce que** le châssis (14, 114) est orientable en site et en azimut.

19. Dispositif selon l'une des revendications précédentes, **caractérisé en ce que** le système optique comprend un unique réflecteur et, de préférence, une unique source lumineuse.

20. Dispositif selon l'une des revendications précédentes, **caractérisé en ce que** le système optique remplit au moins trois fonctions, notamment une fonction aide au virage, une fonction anti-brouillard et une fonction route.
